**Europäisches Patentamt**

**European Patent Office**

**Office européen des brevets**

(19)

(11) Veröffentlichungsnummer : **0 333 009 B1**

## (12) EUROPÄISCHE PATENTSCHRIFT

(45) Veröffentlichungstag der Patentschrift :
**22.07.92 Patentblatt 92/30**

(21) Anmeldenummer : **89104080.0**

(22) Anmeldetag : **08.03.89**

(51) Int. Cl.⁵ : **G01B 21/04**

(54) **Koordinatenmessmaschine.**

(30) Priorität : **17.03.88 DE 3808871**

(43) Veröffentlichungstag der Anmeldung :
**20.09.89 Patentblatt 89/38**

(45) Bekanntmachung des Hinweises auf die
Patenterteilung :
**22.07.92 Patentblatt 92/30**

(84) Benannte Vertragsstaaten :
**CH DE FR GB IT LI**

(56) Entgegenhaltungen :
**DE-A- 3 542 766**
**DE-B- 2 718 506**
**DE-C- 3 125 681**
**Feinwerktechnik & Messtechnik, No. 89, 1981,**
**S. 369-374; Lehrbuch: Fertigungstechnik,**
**Hrsg. Warnecke & Dutschke,Springer-Verlag**
**1984, S. 271-276**

(73) Patentinhaber : **Mauser-Werke Oberndorf**
**GmbH**
**Teckstrasse 11**
**W-7238 Oberndorf (DE)**

(72) Erfinder : **Band, Gerhard**
**Dammstrasse 18**
**W-7238 Oberndorf (DE)**
Erfinder : **Broghammer, Heinz**
**Auf der Eck 4**
**W-7214 Zimmern 3 (DE)**
Erfinder : **Ross, Günther**
**Zollernweg 18**
**W-7238 Oberndorf (DE)**

(74) Vertreter : **Hofmann, Gerhard, Dipl.-Ing.**
**Patentassessor et al**
**Stephanstrasse 49**
**W-8500 Nürnberg 30 (DE)**

## Beschreibung

Die Erfindung betrifft eine Koordinatenmeßmaschine in Portalbauweise nach dem Oberbegriff des Patentanspruches 1.

Eine Koordinatenmeßmaschine der gattungsgemäßen Art ist bereits durch die DE 35 42 766 A1 beschrieben worden. Bei dieser bekannten Koordinatenmeßmaschine bildet das Grundgestell eine Stahl-Schweißkonstruktion mit einer Meßtischplatte sowie mit gehärteten Führungen für die Bewegung des Querträgers, der seinerseits eine Stahl-Schweißkonstruktion mit gehärteten Führungen für die Bewegung des Meßschlittens darstellt. An der Rückseite der Koordinatenmeßmaschine befindet sich auf zwei zueinander beabstandeten Säulen ein kastenförmiger Träger, der in Z-Richtung oberhalb der Meßtischplatte angeordnet ist und eine gehärtete Führung für die Verfahrbarkeit des Querträgers aufweist. Der vordere Abstützarm des Querträgers ist auf unter der Ebene der Meßtischplatte vorgesehene, gehärtete Führungen bewegbar.

Bei einer aus der DE 31 25 681 C2 bekannten Koordinatenmeßmaschine besteht das Grundgestell aus wenigstens einem Kunstharzbeton-Formteil, in das die Stahlführungen eingesetzt sind. Dabei ist die Zusammensetzung des Kunstharzbetons im Bereich der Stahlführungen so gewählt, daß dessen Wärmedehnungskoeffizient etwa dem der Stahlführungen entspricht. Das Grundgestell besitzt ausgehend vom Meßtisch einen hoch über dem Meßtisch gelegenen Längsriegel, in dem die Führung für das Auflager des Querträgers eingesetzt ist.

Dies ist insofern problematisch, da bereits relativ kleine Deformationen, die durch ein Gewicht eines zu vermessenden Werkstückes auf dem Meßtisch hervorgerufen werden können, über die langen Hebelarme der Portalstützen bis in die Führungen gelangen, was zu Maßschwankungen der Führungen und damit zu Meßunsicherheiten führen kann. Hinzu kommt bei dieser Bauart einer Koordinatenmeßmaschine aus einem Kunstharzbeton, daß dieser thermisch nicht hoch beanspruchbar ist. Eine Temperaturüberbelastung kann deshalb durchaus zu Verformungen des Grundgestells und der Abstützarme sowie der Träger führen.

Ausgehend von dem genannten Stand der Technik ist es Aufgabe der Erfindung, eine Koordinatenmeßmaschine der eingangs genannten Art zu schaffen, bei der eine hohe Meßgenauigkeit bei maximaler Verfahrgeschwindigkeit, eine gute Zuverlässigkeit, ein großer Bedienungskomfort, eine leichte Maschinenaufstellung und einfache Beladbarkeit des Meßtisches gewährleistet sind.

Diese Aufgabe wird erfindungsgemäß durch die Merkmale des Patentanspruches 1 gelöst.

Weitere Ausgestaltungen und Ausbildungen des Lösungsweges sind den abhängigen Ansprüchen zu entnehmen.

Diese Koordinatenmeßmaschine bietet eine Reihe von Vorteilen. So erhält man aufgrund der erfinderischen Bauart ein steifes Grundgestell, das auf Luftfederelementen aufstellbar ist und dabei auf ein besonderes Maschinenfundament verzichten kann. Das gesamte Grundgestell ist sehr kompakt aufgebaut, wodurch Deformationen bei Gewichtsauflage auf den Meßtisch weitgehend vermieden werden. Aufgrund der kurzen Hebelarme vom Meßtisch zu den Führungen können evtl. auftretende kleine Deformationen ohne Qualitätsverlust aufgefangen werden.

Durch die relativ geringe Meßtischhöhe und die freie Zugänglichkeit von drei Seiten zum Meßtisch ist eine ideale Beladbarkeit der Koordinatenmeßmaschine gewährleistet. Das gleiche trifft zu für die Bedienung der Meßmaschine, weil hier für die Bedienungsperson eine sehr gute Zugänglichkeit zum gesamten Meßbereich angetroffen wird. Die Meßtischplatte ist im verbindungssteifen Grundgestell mit ihren getrennt aufgebauten Führungen fest integrierter Bestandteil. Die Führungsbahnen sind eingeschweißt und gehärtet. Der Querträger ist symmetrisch aufgebaut und besitzt fest integrierte Stahlführungen sowie Abstützarme, wobei der vordere Abstützarm mit einem Schlitz für lange Tastkopfarme versehen ist. Da keine Führungsschienen mehr aufgeschraubt werden, besteht bei dieser Koordinatenmeßmaschine auch keine mechanische Korrekturmöglichkeit.

Durch das Einschweißen der Führungen wird eine unlösbare Verbindung mit den entsprechenden Bauteilen der Koordinatenmeßmaschine geschaffen. Von Vorteil dabei ist es, daß solche Führungen gemeinsam mit der eingeschweißten Meßtischplatte in einer einzigen Aufspannung geschliffen werden können, wodurch exakt aufeinander abgestimmte Ebenen in einer Endbearbeitung erzielt werden

Insgesamt bietet diese Koordinatenmeßmaschine eine gute Oberfläche der Führungen und ein gleichmäßiges Laufverhalten der gesamten Maschine mit einer hohen Dynamik von Antrieb und Steuerung, wodurch Schwingungen schnell unterdrückt werden. Von ganz besonderem Vorteil ist das mit dieser Bauart erzielte geringe Maschinengewicht bei gleichzeitig hoher Systemgenauigkeit und großer Dynamik.

In den Zeichnungen ist die Erfindung an einem Beispiel dargestellt. Es zeigen:

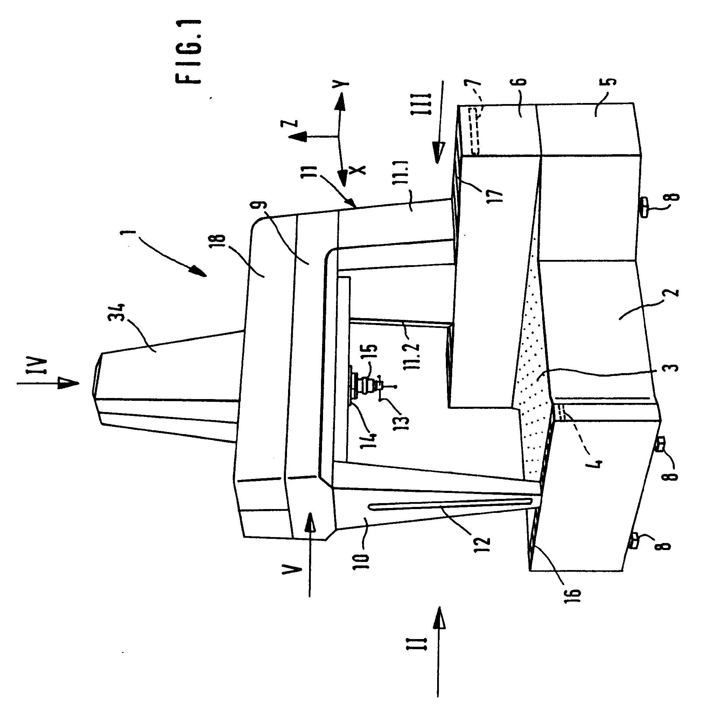

Fig. 1 die Koordinatenmeßmaschine in perspektivischer Ansicht;

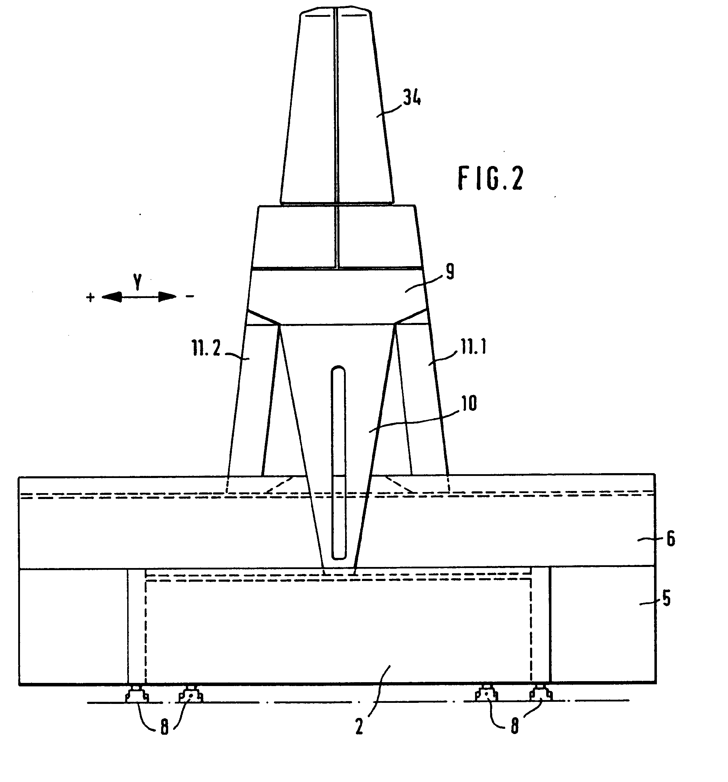

Fig. 2 eine Vorderansicht der Koordinatenmeßmaschine gemäß dem Pfeil II in Fig. 1;

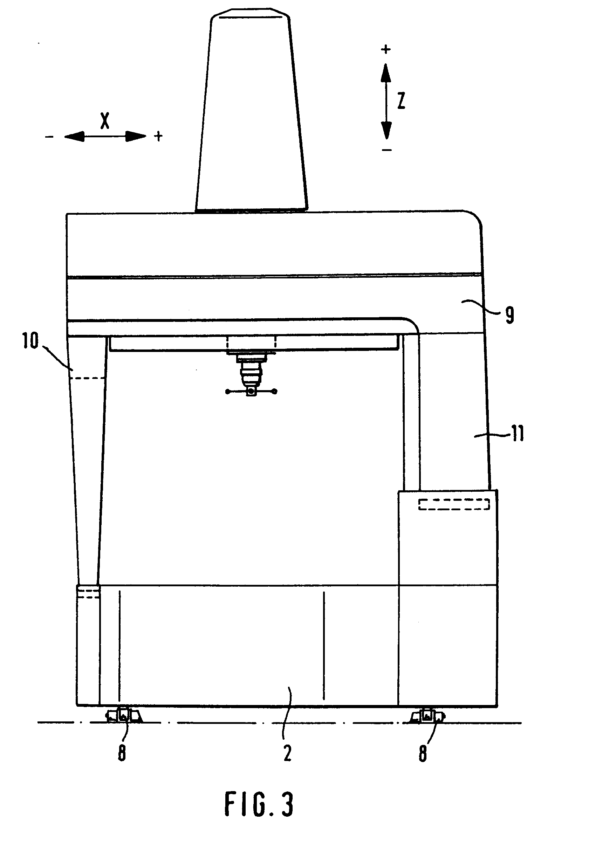

Fig. 3 eine Seitenansicht der Koordinatenmeßmaschine gemäß der Pfeilrichtung III in Fig. 1;

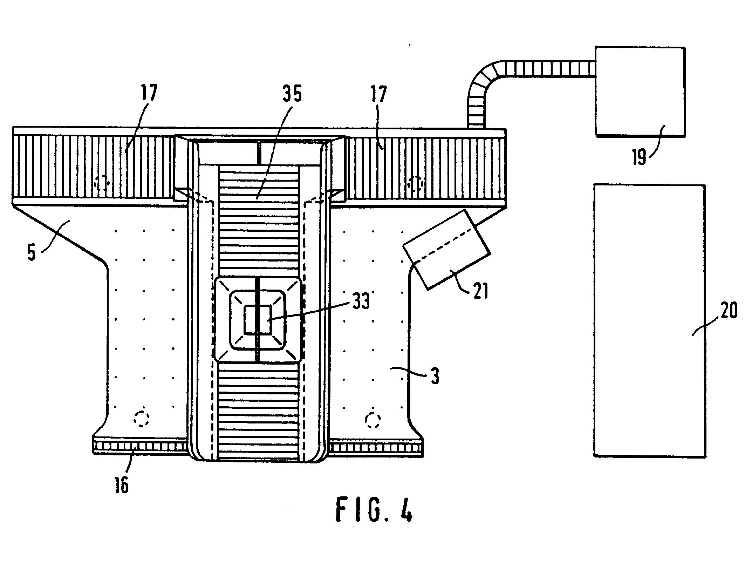

Fig. 4 eine Draufsicht auf die Koordinatenmeßmaschine gemäß dem Pfeil IV in Fig. 1;

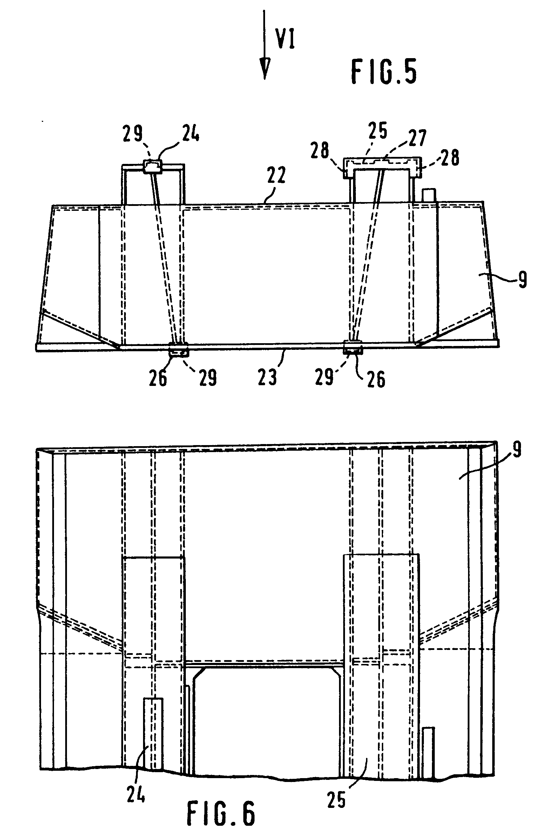

Fig. 5 eine Ansicht des Querträgers mit Führungen nach Pfeil V in Fig. 1;
Fig. 6 eine Draufsicht auf dem Querträger mit Führungen nach dem Pfeil VI in Fig. 5;

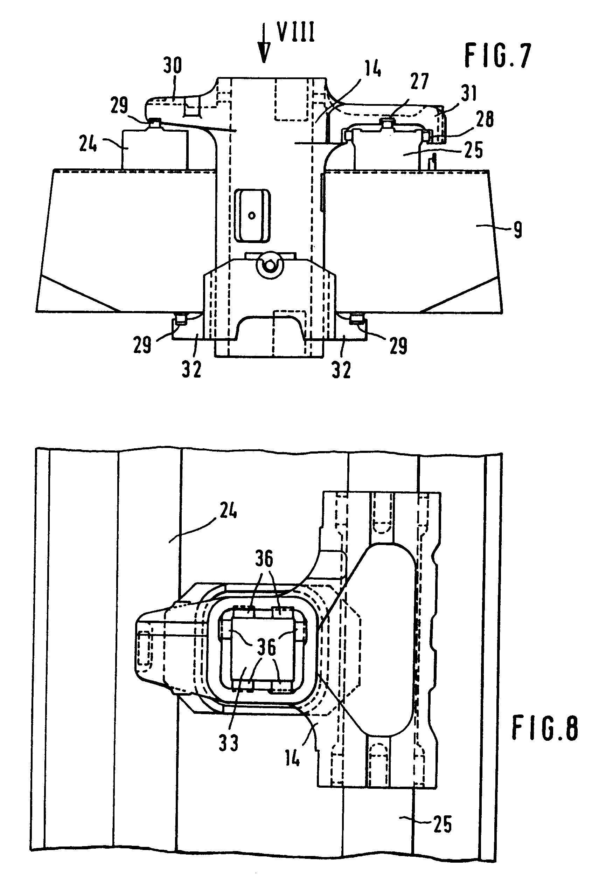

Fig. 7 den Meßschlitten am Querträger in Ansicht;
Fig. 8 den Meßschlitten in der Draufsicht gemäß Pfeil VIII in Fig. 7.

Die Koordinatenmeßmaschine 1 in Portalbauweise besteht im wesentlichen aus einem Grundgestell 2 mit einer eingeschweißten Meßtischplatte 3 und einer eingeschweißten und gehärteten Führung 4 im vorderen Bereich.

Die Rückseite des Grundgestells wird durch einen kastenförmigen Träger 5 gebildet, der sich mit einem aufgesetzten Formteil 6 nur begrenzt bis über die Meßtischplatte 3 erhebt. In diesem oberen Formteil 6 befindet sich wiederum eine eingeschweißte und gehärtete Führung 7. Das gesamte Grundgestell 2 mit der Rückwand 5 und 6 ist eine Stahl-Schweißkonstruktion und im wesentlichen kastenförmig aufgebaut. Die Führungen 4 und 7 sowie die Meßtischplatte 3 werden gemeinsam auf einer Schleifmaschine in einer einzigen Aufspannung geschliffen. Dieses Grundgestell besitzt nur wenig Fügeteile und ein insgesamt geringes Gewicht. Die Aufstellung des Grundgestells 2 wird auf Luftfederelementen 8 vorgenommen. Ein spezielles Maschinenfundament ist bei diesem Aufbau der Koordinatenmeßmaschine 1 nicht erforderlich.

Der rückseitige Träger 5 mit dem aufgebauten Formelement 6 erstreckt sich in Y-Richtung und ist bei dieser Bauweise beliebig verlängerbar. Dies bedeutet, daß dieses Grundgestell 2 ein längenunabhängiges Maschinenkonzept darstellt.

Quer über der Meßtischplatte 3 befindet sich der in Kastenbauweise und Stahl-Schweißkonstruktion ausgeführte Querträger 9, welcher mit eingeschweißten und gehärteten Führungen versehen ist. Der symmetrisch aufgebaute Querträger 9 ruht auf einem vorderen ebenfalls symmetrischen Abstützarm 10 sowie einem hinteren Abstützarm 11, der aus zwei Trägern 11.1 und 11.2 gebildet ist. In dem vorderen Abstützarm 10 befindet sich ein senkrecht verlaufender Längsschlitz 12, wodurch auch relativ lange Tastkopfarme 13 eines an einem Meßschlitten 14 befestigten Tastkopfes 15 einsetzbar sind. Die Führungen 4 und 7 des Grundgestells 2 sind durch Kunststoff-Jalousien 16 und 17 abgedeckt und gegen Staub geschützt.

Die Kunststoff-Jalousien 16 und 17 stehen dabei jeweils mit den Abstützarmen 10 und 11 des Qerträgers 9 in Verbindung.

Die äußere Formgebung der Koordinatenmeßmaschine wird im wesentlichen durch außen auf die Bauelemente aufgesetzte Kunststofformteile 18 erzielt, die gleichzeitig auch einen Schutz für die Grundkonstruktion und die Antriebe sowie Steuerungen der Koordinatenmeßmaschine darstellen. Die Steuerung der Koordinatenmeßmaschine 1 erfolgt von einer Steuerungseinheit 19 und einer Datenstation 20 sowie einem Bedienpult 21, welche mit der Koordinatenmeßmaschine 1 in Wirkverbindung stehen.

Der in Stahl-Schweißkonstruktion aufgebaute kastenförmige Querträger 9 ist symmetrisch aufgebaut und besitzt zwei auf seiner Oberseite 22 und zwei an seiner Bodenfläche 23 angeordnete Führungen 24, 25 und 26. Die Führung 24 ist dabei schmaler ausgeführt als die parallel im Abstand zu ihr angeordnete Führung 25, welche sowohl eine obere Lauffläche 27 und zwei Seitenlaufflächen 28 aufweist. Dagegen besitzen die Führungen 24 und 26 immer nur eine obere Lauffläche 29. Der Schlitten 14 weist zwei obere Arme 30 und 31 auf, die mit entsprechenden Gegenlaufflächen auf den Führungen 24 und 25 gleiten. Der Schlitten 14 besitzt zwei weitere zur Bodenseite 23 des Querträgers 9 gerichtete Arme 32, die wiederum mit entsprechenden Gegenlaufflächen auf den Führungen 29 aufliegen. Durch diese Konstruktion ist der Schlitten 14 oben und unten am Querträger 9 sicher auf Führungen 24, 25 und 26 bewegbar. In dem Schlitten 14 befindet sich zentral zwischen den parallel zueinander angeordneten Führungen 24 und 25 die Pinole 33 in besonderen Führungen 36 für die Aufnahme des Tastkopfes 15. Die Antriebselemente für die Pinole 33 befinden sich in der Abdeckhaube 34 oberhalb des Querträgers 9. Um bei dem Verfahrweg in X-Richtung für die Pinole auch einen entsprechenden Staubschutz zu erhalten, besitzt der Querträger auf seiner Oberseite ebenfalls eine Kunststoff-Jalousie 35, die mit dem Schlitten 14 in Wirkverbindung steht.

## Patentansprüche

1. Koordinatenmeßmaschine (1) in Portalbauweise, mit einem auf Federelementen ruhenden Grundgestell (2) in einer Stahl-Schweißkonstruktion, das zugleich einen Meßtisch bildet, und mit einem Querträger (9) in Stahl-Schweißkonstruktion, der den Meßtisch überspannt, einen Meßschlitten (14) mit einer Pinole (33) für die Aufnahme eines Tastkopfes (15) aufnimmt und sich mit einem vorderen Abstützarm (1) auf einer Führung (4) vor dem Meßtisch abstützt, die unterhalb der Ebene der Meßtischplatte (3) liegt,
dadurch gekennzeichnet,
daß die Meßtischplatte (3) in das Grundgestell (2) eingeschweißt ist und im rückwärtigen Bereich durch einen sich in Y-Richtung erstreckenden, kastenförmigen Längsträger (5,6) begrenzt ist, der die Meßtischplatte (3) in Z-Richtung begreuzt überragt,

daß die Führungen (4,7,24,25,26) für die Bewegung des Querträgers (9) und des die Pinole (33) im Querträger (9) tragenden Meßschlittens (14) jeweils in das Grundgestell (2) und in den Querträger (9) eingeschweißte, gehärtete Führungen sind, von denen die Führungen (4,7) im Grundgestell (2) gemeinsam mit der Meßtischplatte (3) in einer gemeinsamen Aufspannung geschliffen sind, und

daß der vordere Abstützarm (10) mit dem Querträger (9) symmetrisch aufgebaut ist und einen in Z-Richtung verlaufenden Längsschlitz (12) besitzt, der parallel zur Längsachse der Pinole für die Aufnahme des Tastkopfes (15) angeordnet ist.

2. Koordinatenmeßmaschine nach Anspruch 1,
dadurch gekennzeichnet,
daß der Querträger (9) zwei parallel im Abstand zueinander angeordnete Führungen (24,25) aufweist, von denen eine mit einer oberen und zwei seitlichen Laufbahnen (28) ausgestattet ist, während die zweite mit einer oberen Laufbahn (29) versehen ist, und daß der Meßschlitten (14) an Seitenarmen (30,31,32) Führungsflächen besitzt, die auf den Laufbahnen (27,28,29) der Führungen (24,25,26) des Querträgers (9) gleiten.

3. Koordinatenmeßmaschine nach den Ansprüchen 1 und 2,
dadurch gekennzeichnet,
daß der Querträger (9) mit zwei oberen und zwei weiteren an der Bodenseite (23) eingeschweißten, gehärteten Führungen (26) versehen ist, die mit Gegenlaufflächen des Meßschlittens (14) korrespondieren.

4. Koordinatenmeßmaschine nach den Ansprüchen 1 bis 3,
dadurch gekennzeichnet,
daß das Grundgestell (2) und der Querträger (9) mit seinen Absütztarmen (10,11) und der Antriebsrichtung für die Z-Achse durch Kunststoff-Formteile (18) außen verkleidet sind.

5. Koordinatenmeßmaschine nach den Ansprüchen 1 bis 4,
dadurch gekennzeichnet,
daß die Führungen (4,7,24,26) durch Kunststoff-Jalousien abgedeckt sind, die mit den Abstützarmen (10,11) bzw. dem Meßschlitten (14) wirkverbunden sind.

## Claims

1. Coordinate measuring machine (1) of portal design, having a base frame (2) which rests on spring elements, is of a welded steel construction, and at the same time forms a measuring table, and having a transverse bearer (9) which is of welded steel construction, bridges the measuring table, receives a measuring carriage (14) with a sleeve (33) for receiving a sensor head (15), and is supported by means of a front support arm (1) on a guide (4) in front of the measuring table, this guide lying below the plane of the measuring table plate (3), characterized in that

the measuring table plate (3) is welded into the base frame (2) and is delimited in the rearward region by a box-shaped longitudinal support (5, 6) extending in the Y direction and projecting over the measuring table plate (3) in a manner limited in the Z direction,

in that the guides (4, 7, 24, 25, 26) for the movement of the transverse bearer (9) and of the measuring carriage (14) bearing the sleeve (33) in the transverse bearer (9) are in each case hardened guides welded into the base frame (2) and into the transverse bearer (9), of which the guides (4, 7) in the base frame (2) are ground together with the measuring table plate (3) in a common chucking arrangement, and

in that the front support arm (10) is constructed to be symmetrical with the transverse bearer (9) and has a longitudinal slot (12) extending in the Z direction and arranged parallel to the longitudinal axis of the sleeve for receiving the sensor head (15).

2. Coordinate measuring machine according to Claim 1,
characterized in that
the transverse bearer (9) has two guides (24, 25) which are spaced from one another in parallel arrangement and of which one is equipped with one upper and two lateral slideways (28), while the second is provided with one upper slideway (29), and in that the measuring carriage (14) has on side arms (30, 31, 32) guide surfaces which slide on the slideways (27, 28, 29) of the guides (24, 25, 26) of the transverse support (9).

3. Coordinate measuring machine according to Claims 1 and 2,
characterized in that
the transverse bearer (9) is provided with two upper and two further hardened guides (26) which are welded onto the base side (23) and which correspond with counter-running surfaces of the measuring carriage (14).

4. Coordinate measuring machine according to Claims 1 to 3,

characterized in that
the base frame (2) and the transverse bearer (9) with its support arms (10, 11) and the drive unit for the Z axis are encased on the outside by plastics mouldings (18).

5. Coordinate measuring machine according to Claims 1 to 4,
characterized in that
the guides (4, 7, 24, 26) are covered by plastics slatted arrangements which are in active connection with the support arms (10, 11) or the measuring carriage (14).

## Revendications

1. Machine de mesure de cordonnées (1), à construction en portique, avec un bâti de base (2), qui repose sur des éléments élastiques, dans une construction en acier soudé, qui forme en même temps une table de mesure, et avec un support transversal (9), d'une construction en acier soudé, qui recouvre l'étendue de la table de mesure, supporte un chariot de mesure (14) équipé d'une pointe (33) pour recevoir une tête palpeuse (15), et qui prend appui, par un bras d'appui (10) avant, sur un guidage (4) de la table de mesure, situé au-dessous du plan de la plaque de table de mesure (3),
caractérisée en ce que
la plaque de table de mesure (3) est insérée par soudage dans le bâti de base (2) et délimitée dans la zone arrière par un support longitudinal (5,6) en forme de caisson, qui s'étend dans la direction des Y et dépasse de la plaque de table de mesure (3) dans la direction des Z,
en ce que les guidages- (4,7,24,25,26) pour le déplacement du support transversal (9) et du chariot de mesure (14) qui porte la pointe (33) dans le support transversal (9) sont chacun des guidages durcis par trempe, soudés dans le bâti de base (2) et dans le support transversal (9), dont les guidages (4,7) sont situés dans le bâti de base (2), conjointement avec la plaque de table de mesure (3), dans un bridage commun, et
en ce que le bras d'appui avant (10), avec le support transversal (9), est de construction symétrique et comporte une fente longitudinale (12) qui s'étend dans la direction des Z, parallèlement à l'axe longitudinale de la pointe destinée à recevoir la tête palpeuse (15).

2. Machine de mesure de cordonnées selon la revendication 1,
caractérisée en ce que
le support transversal (9) présente deux guidages (24,25), disposés parallèlement et espacés l'un de l'autre, dont le premier est équipé d'une piste de déplacement supérieure et de deux pistes de déplacement latérales (28), tandis que le second est pourvu dune piste de déplacement supérieure (29), et en ce que le chariot de mesure (14) présente sur des bras latéraux (30,31,32) des surfaces de guidage qui glissent sur les pistes de déplacement (27,28,29) des guidages (24,25,26) du support transversal (9).

3. Machine de mesure de cordonnées selon la revendication 1 et 2,
caractérisée en ce que
le support transversal (9) est pourvu de deux guidages supérieures et de deux autres guidages (26), insérés par soudure sur la care inférieure (23) et durcis par trempe et qui correspondent aux contre-surfaces du chariot de mesure (14).

4. Machine de mesure de cordonnées selon les revendications 1 à 3,
caractérisée en ce que
le bâti de base (2) et le support transversal (9), avec ses bras d'appui (10,11) et le dispositif d'entraînement pour l'axe Z, sont revêtus extérieurement de pièces de forme (18) en matière synthétique.

5. Machine de mesure de cordonnées selon les revendications 1 à 3,
caractérisée en ce que
les guidages (4,7,24,26) sont recouverts par des jalousies en matière synthétique, reliées fonctionnellement aux bras d'appui (10,11), respectivement au chariot de mesure (14).

FIG.1

FIG.2

FIG. 3

FIG. 4

EP 0 333 009 B1

FIG.5

FIG.6

FIG.7

FIG.8